# FASCICULE DE BREVET EUROPEEN

(11) **EP 3 254 903 B1**
(45) Date de publication et mention de la délivrance du brevet: **03.07.2019**
(21) Numéro de dépôt: 17173547.5
(22) Date de dépôt: 30.05.2017
(51) Int. Cl.: B60R 13/02

(54) **PIECE DE FIXATION D'ELEMENTS D'HABILLAGE SUR UN ELEMENT DE STRUCTURE LATERAL DE VEHICULE AUTOMOBILE**
FIXIERTEIL FÜR VERKLEIDUNGSELEMENTE AUF EINER SEITLICHEN STRUKTUR EINES KRAFTFAHRZEUGS
PART FOR ATTACHING TRIM ELEMENTS TO A SIDE STRUCTURE ELEMENT OF A MOTOR VEHICLE

(30) Priorité: 07.06.2016 FR 1655193
(43) Date de publication de la demande: 13.12.2017
(73) Titulaire: Renault s.a.s, 92100 Boulogne-Billancourt (FR)
(72) Inventeur: FOUBERT, VINCENT, 78200 BOISSY MAUVOISIN (FR)

(56) Documents cités:
- DE-A1-102011 101 364
- JP-A- 2002 293 166
- JP-A- 2003 146 112
- JP-A- 2007 137 381
- JP-A- 2011 006 019
- JP-A- 2015 116 874

## Description

L'invention concerne une pièce de fixation d'un élément d'habillage de planche de bord et d'un élément d'habillage latéral sur un élément de structure latéral d'un véhicule automobile. En particulier, l'élément de structure latéral du véhicule est une doublure de pied de véhicule.

En général, dans un véhicule automobile, les zones latérales avant du véhicule comportent des triptyques, à savoir des petites vitres latérales situées entre les côtés latéraux du pare-brise et les portes avant du véhicule. Ces triptyques sont situés au-dessus d'un élément structurel de la caisse du véhicule automobile, appelé « doublure de pied », sur la face externe duquel est fixé un élément de carrosserie du véhicule tel qu'un côté de caisse. Chaque doublure de pied s'étend ainsi à proximité de la paroi séparant l'habitacle de l'espace moteur, appelée « tablier », et reçoit en fixation un bord latéral du bloc de planche de bord. Notamment, l'habillage de planche de bord est habituellement fixé latéralement à chaque doublure de pied au moyen d'une pièce de fixation. Cette pièce de fixation sert aussi à fixer sur la doublure de pied un élément d'habillage latéral disposé sous le triptyque, entre la doublure de pied et l'habillage de planche de bord. La pièce de fixation, parfois appelée « pontet », est généralement fixée sur la doublure de pied, sur un bord supérieur de celle-ci, à proximité immédiate du bord de la doublure de pied recevant la vitre latérale ou triptyque.

Le bloc de planche de bord recevant de plus en plus d'éléments, il devient difficile d'y agencer certains câbles, tels que les câbles de commande d'ouverture d'un toit ouvrant, d'allumage du plafonnier, les câbles de haut parleur, etc. Il peut alors s'avérer nécessaire, dans certains véhicules, de faire passer ces câbles le long de la doublure de pied. Toutefois, la fixation des éléments d'habillage de la planche de bord ou sous le triptyque est susceptible d'endommager ces câbles, notamment lors du montage.

Du fait de la grande quantité de pièces à loger et de l'environnement de plus en plus restreint, il devient également difficile d'assurer le montage des éléments entre eux, en particulier à proximité des extrémités latérales de la planche de bord. En outre, il est nécessaire de prévoir suffisamment de place à proximité du bord supérieur de la doublure de pied afin de permettre la soudure de celle-ci au côté de caisse du véhicule.

Le document JP 2002 293166A décrit une pièce de fixation adaptée pour fixer un élément d'habillage d'une planche de bord et d'un élément d'habillage latéral sur un élément de structure latéral d'un véhicule, conformément au préambule de la revendication 1.

Il existe donc un besoin pour une fixation des différents éléments d'habillage des zones latérales avant d'un véhicule qui permette à la fois de répondre aux contraintes d'un d'environnement restreint et d'assurer le passage de câbles sans risque de les détériorer, notamment au montage, et qui permette un montage simple des différents éléments à assembler.

L'invention vise à pallier, au moins en partie, ces inconvénients en proposant une pièce de fixation d'un élément d'habillage d'une planche de bord et d'un élément d'habillage latéral sur un élément de structure latéral d'un véhicule, comprenant les caractéristiques de la revendication 1.

Il est ainsi possible de maintenir un ou plusieurs câbles sur la pièce de fixation, permettant d'éviter de les détériorer lors du montage des éléments d'habillage. En outre, les pattes de fixation de câble étant situées sur un même bord que les pattes de fixation des éléments d'habillage, leur accès peut être facilité, notamment lorsque ce bord est un bord supérieur dans la position de montage de la pièce de fixation sur l'élément de structure latéral. De plus, la disposition des pattes de fixation de câbles solidaires dudit bord de la partie de fixation, entre des pattes de fixation d'éléments d'habillage, permet d'obtenir une pièce de fixation présentant un faible encombrement.

La pièce de fixation selon la présente invention peut en outre présenter une ou plusieurs des caractéristiques suivantes :
- La pièce de fixation comprend au moins une patte de fixation de câble solidaire d'une patte de fixation d'un élément d'habillage. Ceci peut permettre de prévoir davantage de pattes de fixation de câble pour un encombrement limité.
- Les pattes de fixation d'élément d'habillage présentent une extrémité de fixation coudée distante des pattes de fixation de câble solidaires dudit bord de la partie de fixation suivant une direction sensiblement perpendiculaire à ce bord. Ceci peut permettre de mieux préserver les câbles lors du montage des éléments d'habillage.
- Les pattes de fixation solidaires dudit bord de la partie de fixation sont distinctes les unes des autres et disjointes de manière à ménager des espaces libres entre elles. Ceci permet de faciliter la fixation des éléments entourant la pièce de fixation, et notamment de faciliter la soudure de l'élément de structure latéral à un élément de la caisse du véhicule à proximité de la pièce de fixation. Ceci peut également permettre de faciliter le logement d'un élément fonctionnel. A cet effet, les espaces libres peuvent être suffisamment grands pour loger un élément fonctionnel, notamment de type haut-parleur.
- Les pattes de fixation de câble et/ou une partie au moins des pattes de fixation d'élément d'habillage s'étendent sensiblement parallèlement à la partie de fixation, laquelle est sensiblement plane.
- Sur au moins une partie de sa longueur, le bord de la partie de fixation supportant les pattes de fixation de câble et d'habillage s'étend sensiblement perpendiculairement à la partie de fixation, laquelle est sensiblement plane. Ceci peut permettre de servir de support à un câble, favorisant son maintien. Notamment, lorsque les pattes de fixation de câble sont elles-mêmes parallèles à la partie de fixation, un câble peut reposer contre ces pattes de fixation de câble.

La pièce de fixation selon l'invention peut notamment servir à fixer les éléments d'habillage sur un élément de structure tel qu'une doublure de pied.

L'invention concerne ainsi également une structure de véhicule automobile comprenant, de chaque côté latéralement, une doublure de pied située sous une vitre latérale, notamment entre une porte latérale et une aile avant, caractérisé en ce qu'elle comprend une pièce de fixation selon l'invention, solidaire d'un bord supérieur de la doublure de pied sur laquelle sont fixés des câbles d'alimentation électrique, un élément d'habillage de la planche de bord et un élément d'habillage latéral situé enture l'élément d'habillage de planche de bord et la doublure de pied.

L'invention est maintenant décrite en référence aux dessins annexés, non limitatifs, dans lesquels :
- la figure 1 représente une vue en perspective d'une pièce de fixation selon un mode de réalisation de l'invention, fixée sur une doublure de pied d'un véhicule automobile et recevant des câbles;
- la figure 2 représente une vue en perspective de la pièce de fixation de la figure 1 ;
- la figure 3 représente une vue en perspective de la partie latérale avant d'un véhicule, après fixation d'éléments d'habillage au moyen de la pièce de fixation.

Dans la présente description, les termes avant, arrière, supérieur, inférieur, font référence aux directions avant et arrière du véhicule, lorsque la pièce de fixation est montée sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

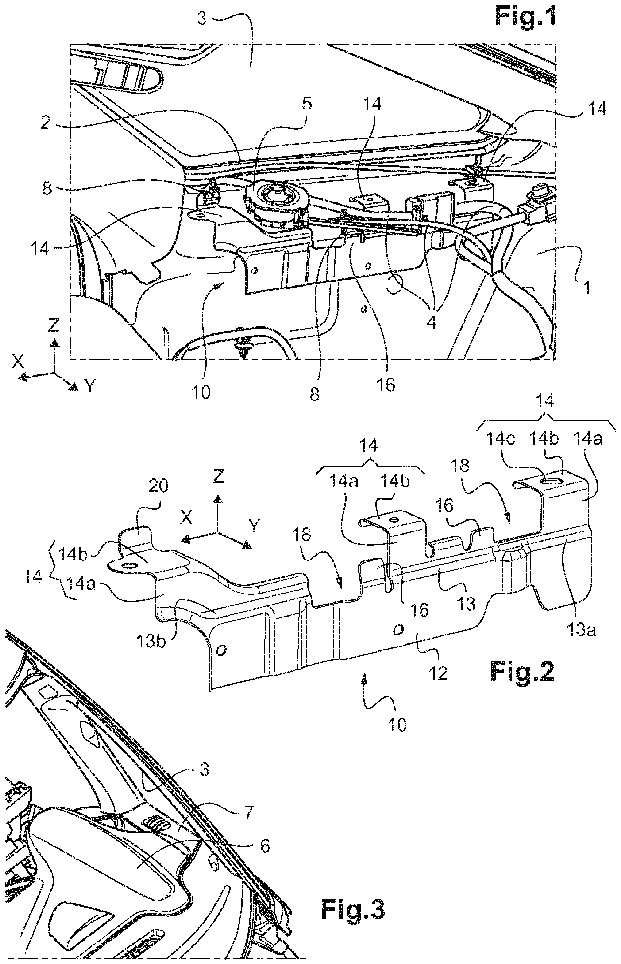

La figure 1 représente partiellement une zone latérale avant gauche d'un véhicule automobile. Seule la zone latérale avant gauche du véhicule est décrite ici, la zone latérale avant droite étant identique, par symétrie suivant un plan longitudinal.

Cette zone latérale avant gauche comporte notamment un élément de structure latéral 1, ici une doublure de pied, présentant un bord supérieur 2 situé sous une vitre 3, appelée aussi triptyque, visible figure 3. Des câbles 4 d'alimentation électrique provenant du bloc de tableau de bord (non représenté) sont également visibles.

La figure 1 représente en outre une pièce de fixation 10 pour un élément d'habillage de planche de bord 6 et un élément d'habillage latéral 7 sur la doublure de pied 1. Pour des raisons de clarté, ces éléments d'habillage 6 et 7 ne sont visibles que sur la figure 3.

Tel que visible sur la figure 2, la pièce de fixation 10 présente une partie 12 de fixation sur l'élément de structure latéral 1 du véhicule. Cette partie 12 de fixation est ici sensiblement plane et peut être appliquée contre une partie sensiblement plane correspondante de la doublure de pied 1, tel que visible sur la figure 1.

La pièce de fixation 10 comprend en outre des pattes de fixation 14, 16 qui s'étendent sur le long d'un même bord 13 de la partie de fixation 12, ici un bord supérieur, sensiblement rectiligne et horizontal en position de montage.

Les pattes de fixation 14 sont des pattes de fixation des éléments d'habillage 6, 7 précités. Dans l'exemple représenté, ces pattes 14 se présentent sous la forme d'une plaque coudée, à forme générale en L retourné, présentant une partie 14a solidaire du bord 13 et s'étendant sensiblement parallèlement à la partie de fixation 12 et une partie supérieure 14b, sensiblement perpendiculaire à la partie 14a, permettant de supporter des éléments d'habillage. Les pattes de fixation d'élément d'habillage 14 présentent ainsi une extrémité de fixation coudée, distante des pattes de fixation de câble 16 solidaires suivant une direction sensiblement perpendiculaire au bord 13. Dit autrement, les parties 14b sont situées à une plus grande distance du bord 13 que les pattes de fixation 16, tel que visible sur la figure 2.

Les pattes 16 de fixation sont quant à elles destinées à recevoir des éléments de fixation des câbles 4, tels que des pinces 8 (voir figure 1). Conformément à l'invention, les pattes de fixation de câble 16 solidaires du bord 13 de la partie de fixation sont disposées entre les pattes de fixation d'éléments d'habillage 14. Ceci permet notamment d'éviter d'avoir à augmenter la longueur du bord 13.

On notera que le bord supérieur 13 de la partie 12 de fixation s'étend, sur une partie de sa longueur, sensiblement perpendiculairement à la partie 12 de fixation, ici sensiblement plane. Les pattes de fixation 16 s'étendent quant à elle sensiblement parallèlement au plan de la partie de fixation 12. Ainsi, le bord supérieur 13 de la partie de fixation forme des surfaces 13a, 13b sur lesquelles peut reposer un câble 4, tel que visible sur la figure 4. Ceci permet de faciliter la mise en place du câble et de lui ménager un emplacement, alors que l'environnement autour de la pièce de fixation est restreint.

Dans l'exemple représenté, les différentes pattes de fixation 14, 16 sont distinctes les unes des autres, et disjointes, notamment longitudinalement, de sorte que des espaces libres 18 sont ménagés entre les différentes pattes de fixation 14, 16. Il est ainsi possible de faire passer des câbles et/ou des outils dans ces espaces libres 18, alors que la pièce de fixation 10 est solidarisée à la doublure de pied 1.

On notera en particulier que ces espaces libres 18 peuvent être suffisants pour recevoir un élément fonctionnel 5, tel que le haut parleur représenté sur la figure 1.

On notera que la pièce de fixation 10 comprend en outre une patte de fixation de câble 20, solidaire d'une patte de fixation d'un élément d'habillage 14. L'une des pattes de fixation d'élément d'habillage 16 présente en outre un orifice 14c, pouvoir recevoir un clip de fixation pour un câble.

Le montage des différents éléments est maintenant décrit. La pièce de fixation 10 est d'abord fixée sur la doublure de pied 1 par soudure et/ou rivetage. La doublure de pied 1 est alors elle-même soudée au coté de caisse du véhicule (non visible). La soudure étant réalisée du côté de la doublure de pied 1, il est possible de faire passer des pinces à souder grâce aux espaces libres 18 ménagés dans la pièce de fixation 10. Une fois le côté caisse soudé à la doublure de pied 1, on peut approcher le bloc de planche de bord et fixer les câbles 4 sur les pattes de fixation 16, 20, tel que visible sur la figure 1. On peut également loger des éléments fonctionnels, tel que le haut parleur 5. Les câbles 4 étant ainsi maintenus, il est possible de procéder à la fixation des éléments d'habillage de planche de bord 6 et d'habillage latéral 7 sous triptyque. Ces derniers viennent se fixer sur les parties 14b des pattes 14 de fixation.

La pièce de fixation selon l'invention permet ainsi, dans un environnement restreint :
- de fixer l'ensemble des éléments tels que les câbles et éléments d'habillage,
- de laisser passer des pinces à souder permettant de lier la doublure de pied au côté de caisse,
- de laisser passer un élément fonctionnel de type haut parleur,
- d'assurer le montage de tous ces éléments sans les endommager.

## Revendications

1. Pièce de fixation (10) d'un élément d'habillage d'une planche de bord (6) et d'un élément d'habillage latéral (7) sur un élément de structure latéral (1) d'un véhicule, comprenant :
- une partie de fixation (12) sur l'élément de structure latéral (1),
- sur un bord (13) de ladite partie de fixation (12), des pattes de fixation (14) des éléments d'habillage (6, 7),
- sur le même bord (13) de la partie de fixation (12), des pattes de fixation (16) de câble
**caractérisée en ce que** les pattes de fixation de câble (16) solidaires dudit bord (13) de la partie de fixation sont disposées entre des pattes de fixation d'éléments d'habillage (14).

2. Pièce de fixation (10) selon la revendication 1, **caractérisée en ce qu'**elle comprend au moins une patte de fixation de câble (20) solidaire d'une patte de fixation d'un élément d'habillage (14).

3. Pièce de fixation (10) selon l'une quelconque des revendications 1 ou 2, **caractérisée en ce que** les pattes de fixation d'élément d'habillage (14) présentent une extrémité de fixation coudée (14b) distante des pattes de fixation de câble (16) solidaires dudit bord (13) de la partie de fixation suivant une direction sensiblement perpendiculaire à ce bord.

4. Pièce de fixation (10) selon l'une quelconque des revendications 1 à 3, **caractérisée en ce que** les pattes de fixation (14, 16) solidaires dudit bord (13) de la partie de fixation sont distinctes les unes des autres et disjointes de manière à ménager des espaces libres (18) entre elles.

5. Pièce de fixation (10) selon la revendication 4, **caractérisée en ce que** les espaces libres (18) sont suffisamment grands pour loger un élément fonctionnel (5) de type haut-parleur.

6. Pièce de fixation (10) selon l'une quelconque des revendications 1 à 5, **caractérisée en ce que** les pattes de fixation de câble (16) et/ou une partie (14a) au moins des pattes de fixation d'élément d'habillage (14) s'étendent sensiblement parallèlement à la partie de fixation (12), laquelle est sensiblement plane.

7. Pièce de fixation (10) selon l'une quelconque des revendications 1 à 5, **caractérisée en ce que**, sur au moins une partie de sa longueur, le bord (13) de la partie de fixation (12) supportant les pattes de fixation de câble et d'habillage s'étend sensiblement perpendiculairement à la partie de fixation (12), laquelle est sensiblement plane.

8. Structure de véhicule automobile comprenant, de chaque côté latéralement, une doublure de pied (1) située sous une vitre latérale (3), notamment entre une porte latérale et une aile avant, **caractérisée en ce qu'**elle comprend une pièce de fixation (10) selon l'une des revendications 1 à 7 solidaire d'un bord supérieur (2) de la doublure de pied (1) sur laquelle sont fixés des câbles (4) d'alimentation électrique, un élément (6) d'habillage de la planche de bord et un élément (7) d'habillage latéral situé enture l'élément (6) d'habillage de planche de bord et la doublure de pied (1).

## Patentansprüche

1. Fixierteil (10) zur Befestigung eines Verkleidungselements (6) eines Armaturenbretts und eines seitlichen Verkleidungselements (7) an einem seitlichen Strukturelement (1) eines Fahrzeugs, umfassend:
- einen Abschnitt zur Befestigung (12) an dem seitlichen Strukturelement (1),
- an einem Rand (13) des Befestigungsabschnitts (12), Befestigungslaschen (14) der Verkleidungselemente (6, 7),
- an demselben Rand (13) des Befestigungsabschnitts (12), Befestigungslaschen (16) für Kabel,
**dadurch gekennzeichnet, dass** die mit dem Rand (13) des Befestigungsabschnitts fest verbundenen Kabelbefestigungslaschen (16) zwischen Befestigungslaschen (14) von Verkleidungselementen angeordnet sind.

2. Fixierteil (10) nach Anspruch 1, **dadurch gekennzeichnet, dass** es wenigstens eine Kabelbefestigungslasche (20) umfasst, die mit einer Befestigungslasche (14) eines Verkleidungselements fest verbunden ist.

3. Fixierteil (10) nach einem der Ansprüche 1 oder 2, **dadurch gekennzeichnet, dass** die Verkleidungselement-Befestigungslaschen (14) ein abgewinkeltes Befestigungsende (14b) aufweisen, das von den Kabelbefestigungslaschen (16), die mit dem Rand (13) des Befestigungsabschnitts fest verbunden sind, in einer zu diesem Rand im Wesentlichen senkrechten Richtung entfernt ist.

4. Fixierteil (10) nach einem der Ansprüche 1 bis 3, **dadurch gekennzeichnet, dass** die Befestigungslaschen (14, 16), die mit dem Rand (13) des Befestigungsabschnitts fest verbunden sind, voneinander verschieden und disjunkt sind, so dass freie Zwischenräume (18) zwischen ihnen angeordnet sind.

5. Fixierteil (10) nach Anspruch 4, **dadurch gekennzeichnet, dass** die freien Zwischenräume (18) genügend groß sind, um ein Funktionselement (5) von der Art eines Lautsprechers aufzunehmen.

6. Fixierteil (10) nach einem der Ansprüche 1 bis 5, **dadurch gekennzeichnet, dass** die Kabelbefestigungslaschen (16) und/oder wenigstens ein Abschnitt (14a) der Verkleidungselement-Befestigungslaschen (14) sich im Wesentlichen parallel zu dem Befestigungsabschnitt (12) erstrecken, welcher im Wesentlichen eben ist.

7. Fixierteil (10) nach einem der Ansprüche 1 bis 5, **dadurch gekennzeichnet, dass** der Rand (13) des Befestigungsabschnitts (12), der die Kabel- und Verkleidungs-Befestigungslaschen trägt, sich auf wenigstens einem Teil seiner Länge im Wesentlichen senkrecht zu dem Befestigungsabschnitt (12) erstreckt, welcher im Wesentlichen eben ist.

8. Kraftfahrzeugstruktur, welche seitlich auf jeder Seite eine Säulenverkleidung (1) umfasst, die sich unter einem Seitenfester (3) befindet, insbesondere zwischen einer Seitentür und einem vorderen Kotflügel, **dadurch gekennzeichnet, dass** sie ein Fixierteil (10) nach einem der Ansprüche 1 bis 7 umfasst, das mit einem oberen Rand (2) der Fußauskleidung (1) fest verbunden ist und an welchem Stromversorgungskabel (4), ein Verkleidungselement (6) des Armaturenbretts und ein seitliches Verkleidungselement (7), das sich zwischen dem Verkleidungselement (6) des Armaturenbretts und der Säulenverkleidung (1) befindet, befestigt sind.

## Claims

1. Component (10) for fastening a trim element to a dashboard (6) and for fastening a lateral trim element (7) to a lateral structural element (1) of a vehicle, comprising:
- a part (12) for fastening to the lateral structural element (1),
- on one edge (13) of said fastening part (12), lugs (14) for fastening the trim elements (6, 7),
- on the same edge (13) of the fastening part (12), cable fastening lugs (16),
**characterized in that** the cable fastening lugs (16) integral with said edge (13) of the fastening part are disposed between the lugs (14) for fastening trim elements.

2. Fastening component (10) according to Claim 1, **characterized in that** it comprises at least one cable fastening lug (20) integral with a lug (14) for fastening a trim element.

3. Fastening component (10) according to either one of Claims 1 and 2, **characterized in that** the lugs (14) for fastening a trim element have an angled fastening end (14b) at a distance from the cable fastening lugs (16) integral with said edge (13) of the fastening part in a direction substantially perpendicular to this edge.

4. Fastening component (10) according to any one of Claims 1 to 3, **characterized in that** the fastening lugs (14, 16) integral with said edge (13) of the fastening part are different from one another and separated so as to form free spaces (18) between one another.

5. Fastening component (10) according to Claim 4, **characterized in that** the free spaces (18) are large enough to accommodate a functional element (5) of the loudspeaker type.

6. Fastening component (10) according to any one of Claims 1 to 5, **characterized in that** the cable fastening lugs (16) and/or at least one part (14a) of the lugs (14) for fastening a trim element extend substantially parallel to the fastening part (12), which is substantially planar.

7. Fastening component (10) according to any one of Claims 1 to 5, **characterized in that**, along at least a part of its length, the edge (13) of the fastening part (12) bearing the cable fastening lugs and trim fastening lugs extends substantially perpendicularly to the fastening part (12), which is substantially planar.

8. Motor vehicle structure comprising, on each lateral side, a pillar lining (1) situated under a side window (3), notably between a side door and a front wing, **characterized in that** it comprises a fastening component (10) according to one of Claims 1 to 7, which is secured to an upper edge (2) of the pillar lining (1) to which electrical power cables (4), a trim element (6) of the dashboard and a lateral trim element (7) situated between the dashboard trim element (6) and the pillar lining (1) are fastened.
